# FASCICULE DE BREVET EUROPEEN

(11) **EP 2 935 349 B1**
(45) Date de publication et mention de la délivrance du brevet: **14.10.2020**
(21) Numéro de dépôt: 13827021.0
(22) Date de dépôt: 19.12.2013
(51) Int. Cl.: C08F 4/46, C08F 4/50, C08G 59/68, C08L 63/00

(54) **SYSTEMES CATALYTIQUES POUR RESINES THERMODURCISSABLES DEFORMABLES A L'ETAT THERMODURCI**
KATALYSATORSYSTEME FÜR IM WÄRMEGEHÄRTETEN ZUSTAND VERFORMBARE WÄRMEHÄRTBARE HARZE
CATALYTIC SYSTEMS FOR THERMOSETTING RESINS WHICH ARE DEFORMABLE IN THE THERMOSET STATE

(30) Priorité: 21.12.2012 FR 1262672
(43) Date de publication de la demande: 28.10.2015
(73) Titulaire: Arkema France, 92700 Colombes (FR); Centre National de la Recherche Scientifique, 75016 Paris (FR); Fonds de l'ESPCI - Georges Charpak, 75005 Paris (FR)
(72) Inventeur: DUQUENNE, Christophe, F-75010 Paris (FR); LEIBLER, Ludwik, F-75006 Paris (FR); MELAS, Michel, F-60550 Verneuil En Halatte (FR)
(74) Mandataire: Arkema Patent
(86) Numéro de dépôt international: PCT/FR2013/053186
(87) Numéro de publication internationale: WO 2014/096716

(56) Documents cités:
- EP-A1- 1 806 376
- WO-A1-2012/152859
- FR-A1- 2 577 231
- FR-A2- 2 585 714

## Description

### DOMAINE DE L'INVENTION

La présente invention se rapporte à l'utilisation de certains catalyseurs pour la fabrication de résines thermodurcissables, permettant la déformation de ces résines à l'état thermodurci.

Par résine « thermodurcissable », on entend un monomère, oligomère, prépolymère, polymère ou toute macromolécule apte à être réticulé chimiquement. On entend plus préférentiellement un monomère, oligomère, prépolymère, polymère ou toute macromolécule apte à être réticulé chimiquement lorsqu'il est mis à réagir avec un durcisseur (encore appelé réticulant) en présence d'une source d'énergie, par exemple de chaleur ou de rayonnement, et éventuellement d'un catalyseur.

Par résine « thermodurcie » ou « à l'état thermodurci », on entend une résine thermodurcissable réticulée chimiquement de sorte que son point de gel soit atteint ou dépassé. Par point de gel, on entend le degré de réticulation à partir duquel la résine n'est quasiment plus soluble dans les solvants. Toute méthode classiquement utilisée par l'homme du métier pourra être mise en œuvre pour le vérifier. On pourra par exemple mettre en œuvre le test décrit dans la demande WO97/23516 page 20. Une résine est considérée comme thermodurcie au sens de l'invention dès lors que son taux de gel, c'est-à-dire le pourcentage de sa masse résiduelle après mise en solvant relativement à sa masse initiale avant mise en solvant, est égal ou supérieur à 75 %.

### ARRIERE-PLAN TECHNIQUE

Le document WO2011/151584 décrit des matériaux thermodurcis, en particulier des résines et des composites, pouvant être façonnés à chaud. Ce phénomène est rendu possible par des réactions de transestérification qui peuvent survenir intrinsèquement dans le matériau thermodurci. De tels matériaux résultent de la mise en contact d'au moins un dit précurseur de résine thermodurcissable comportant des fonctions hydroxyles et/ou des groupements époxy et éventuellement des fonctions ester, avec au moins un durcisseur choisi parmi les acides carboxyliques, en présence d'au moins un catalyseur de transestérification utilisé à raison de 5 à 25% en moles de la quantité molaire totale de fonctions hydroxyles et/ou époxy que comporte ledit précurseur de résine thermodurcissable. Ce document mentionne que le catalyseur de transestérification est avantageusement choisi parmi les sels métalliques de zinc, d'étain, de magnésium, de cobalt, de calcium, de titane et de zirconium et peut également être choisi parmi des catalyseurs de nature organique comme le benzyldiméthylamide et le chlorure de benzyltriméthylammonium Le catalyseur de transestérification effectivement mis en œuvre dans un exemple de réalisation résulte de la solubilisation d'acétate de zinc dihydrate dans le durcisseur, en l'espèce un mélange de dimères et de trimères d'acide gras (Pripol® 1040). Ainsi, nulle mention n'est faite de l'utilisation d'un mélange de catalyseurs.

De la même façon, le document WO2012/101078 décrit des matériaux thermodurcis, notamment des résines et des composites, pouvant être façonnés à chaud, grâce à des réactions de transestérification qui peuvent survenir intrinsèquement dans le matériau thermodurci. Ces matériaux résultent de la mise en contact d'au moins un dit précurseur de résine thermodurcissable comportant des fonctions hydroxyles et/ou des groupements époxy et éventuellement des fonctions ester, avec au moins un durcisseur choisi cette fois parmi les anhydrides d'acide, en présence d'au moins un catalyseur de transestérification utilisé à raison de 5 à 25% en moles de la quantité molaire totale de fonctions hydroxyles et/ou époxy que comporte ledit précurseur de résine thermodurcissable. Ce document mentionne que le catalyseur de transestérification est avantageusement choisi parmi les sels métalliques de zinc, d'étain, de magnésium, de cobalt, de calcium, de titane et de zirconium et peut également être choisi parmi des catalyseurs de nature organique comme le benzyldiméthylamide et le chlorure de benzyltriméthylammonium. Il est par ailleurs mentionné que le catalyseur de transestérification est avantageusement choisi parmi l'acétylacétonate de zinc et le benzyldiméthylamide. Ainsi, nulle mention n'est faite de l'utilisation d'un mélange de catalyseurs.

Il existe toujours un besoin pour disposer de matériaux thermodurcis déformables améliorés par rapport à ceux connus de l'état de la technique, notamment en termes de performances mécaniques. Il serait en particulier intéressant d'augmenter leur potentiel de déformation à l'état thermodurci, ce qui élargirait le champ des applications industrielles envisageables pour ces matériaux.

Il existe également un besoin pour améliorer le procédé de fabrication et/ou de déformation de tels matériaux. En particulier, au cours d'un cycle industriel, le procédé utilisé impose des contraintes en terme de stabilité du système non réticulé pour permettre sa mise en œuvre (par exemple coulée, injection, revêtement), et en terme de vitesse de réticulation, que l'on cherche généralement à augmenter. L'utilisation des catalyseurs de transestérification de l'état de la technique, dans une résine thermodurcie déformable telle que celles décrites dans les documents susvisés, oblige à opérer à une température élevée, souvent supérieure ou égale à 180°C, pour que le temps de réticulation et/ou de transformation de la résine soit acceptable. Pour éviter une potentielle dégradation de la résine et/ou diminuer le coût énergétique de l'opération, il serait donc utile de s'affranchir de ces conditions élevées de température.

Les inventeurs ont trouvé que l'association de certains catalyseurs permet de répondre, au moins partiellement, à ces besoins.

### DESCRIPTION DE L'INVENTION

Lorsqu'il est fait référence à des intervalles, les expressions du type « allant de ... à ... » incluent les bornes de l'intervalle. Les expressions du type « compris entre ... et ... » excluent les bornes de l'intervalle. Sauf mention contraire, les pourcentages exprimés sont des pourcentages massiques. Les paramètres auxquels il est fait référence sont mesurés à pression atmosphérique et à température ambiante (environ 20°C). Tous les modes de réalisations décrits peuvent avantageusement être combinés entre eux.

L'invention a pour premier objet une composition comprenant, voire étant constituée de, au moins :
- un catalyseur (C1) comprenant au moins un atome d'un élément (M1) choisi parmi : Al, Sc, Ti, Mg, Mn, Fe, Co, Ni, Cu, Zn, Zr, Sn, Hf, Pb, Bi, Sb et In,
- un catalyseur (C2) comprenant au moins un atome d'un élément (M2) choisi parmi les métaux alcalins et les métaux alcalino-terreux,
- le catalyseurs (C1) est un composé de l'élément (M1) et le catalyseurs (C2) un composé de l'élément (M2), ces composés étant choisis parmi : les phosphates, les carbonates, les oxydes, les hydroxydes, les sulfures ; les carboxylates comportant au moins une fonction -COO⁻ portée par une chaîne hydrocarbonée présentant de 1 à 40 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les alcoolates comportant au moins une fonction -O⁻ portée par une chaîne hydrocarbonée présentant de 1 à 20 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les acétylacétonates ; les dikétiminates ; et leurs mélanges.
- une résine thermodurcissable et/ou un durcisseur de résine thermodurcissable.

L'atome de l'élément (M1) ou (M2) peut être sous la forme d'un métal solide et insoluble, seul ou en alliage avec d'autres métaux, ou sous forme cationique, en particulier sous forme d'un sel organique ou inorganique, ou encore sous forme d'un complexe organométallique. Selon un mode de réalisation préféré, il est sous forme cationique.

Un catalyseur (C1) peut comprendre un ou plusieurs éléments (M1) choisis dans la liste ci-dessus. Un catalyseur (C2) peut comprendre un ou plusieurs éléments (M2) choisis dans la liste ci-dessus.

La composition peut comprendre un ou plusieurs catalyseurs de type (C1) et un ou plusieurs catalyseurs de type (C2).

Il est entendu que les catalyseurs (C1) et (C2) sont des catalyseurs présents dans la composition de l'invention, en plus des catalyseurs susceptibles d'être déjà présents de façon intrinsèque dans la résine thermodurcissable et/ou dans le durcisseur, du fait de leur préparation pouvant être réalisée en présence de catalyseurs en faible teneur, telle que la préparation de la résine polyester carboxylé réalisée à l'aide de sel d'étain, décrite dans le document FR 2 577 231.

Le terme « résine thermodurcissable » est employé au sens donné en préambule de la présente description.

Le terme « durcisseur » désigne un agent réticulant apte à réticuler une résine thermodurcissable. Il s'agit généralement d'un composé polyfonctionnel porteur de fonctions réactives capables de réagir avec des fonctions réactives portées par la résine. Typiquement, les fonctions réactives d'un durcisseur sont des fonctions aminés, acides, anhydrides ou (méth)acrylates. Dans le cadre de la présente invention, ledit durcisseur potentiellement présent dans la composition porte préférentiellement des fonctions réactives de type acide et/ou anhydride.

### Catalyseurs (C1) et (C2)

Selon un mode de réalisation, les catalyseurs (C1) et (C2) sont des catalyseurs de transestérification. L'expression « catalyseur de transestérification » est employée au sens classique pour l'homme de l'art. En particulier, il peut s'agir d'un composé satisfaisant au test décrit dans la publication WO2012/101078, aux pages 14-15.

Le catalyseur (C1) comprend au moins un élément (M1) choisi parmi : Al, Sc, Ti, Mg, Mn, Fe, Co, Ni, Cu, Zn, Zr, Sn, Hf, Pb, Bi, Sb et In. De préférence, l'élément (M1) est plus particulièrement choisi parmi Ti, Mn, Fe, Co, Zn, Zr, Sn et Bi, de préférence parmi Ti, Zn, Zr, Sn et Bi, plus préférentiellement parmi Ti, Zn, Zr et Bi, en particulier Zn et avantageusement Zn (II).

Selon un mode de réalisation, l'élément (M1) n'est pas Sn de façon à s'affranchir des problèmes liés à la présence d'étain dans la composition finale de résine thermodurcie. Ainsi, selon ce mode de réalisation, l'élément (M1) est choisi parmi : Al, Sc, Ti, Mg, Mn, Fe, Co, Ni, Cu, Zn, Zr, Hf, Pb, Bi, Sb et In.

Le catalyseur (C1) est un composé de l'élément (M1) choisi parmi les phosphates, les carbonates, les oxydes, les hydroxydes, les sulfures ; les carboxylates comportant au moins une fonction -COO⁻ portée par une chaîne hydrocarbonée présentant de 1 à 40 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les alcoolates comportant au moins une fonction -O⁻ portée par une chaîne hydrocarbonée présentant de 1 à 20 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les acétylacétonates ; les dikétiminates ; et leurs mélanges

Selon un mode de réalisation particulier du précédent, le catalyseur (C1) est un composé de l'élément (M1) plus particulièrement choisi parmi les carboxylates, les alcoolates, les acétylacétonates et leurs mélanges.

Selon un mode de réalisation particulier du précédent, le catalyseur (C1) est un composé de l'élément (M1) choisi parmi les carboxylates, et plus particulièrement les alcanoates et les mono- ou polyalkylalcanoates. A titre préféré, on peut citer l'acétate, le 2-éthylhexanoate, le laurate, le stéarate, l'hydroxystéarate, l'oléate et leurs mélanges.

Selon un autre mode de réalisation particulier, le catalyseur (C1) est un composé de l'élément (M1) choisi parmi les acétylacétonates, hydratés ou anhydres.

Comme catalyseur (C1) convenant particulièrement à la mise en œuvre de l'invention, on peut citer l'acétylacétonate de zinc Zn(acac)₂.

En variante des modes de réalisation ci-dessus, le catalyseur (C1) est présent dans la composition sous forme d'une « espèce activée », c'est-à-dire sous forme recombinée avec un autre composé de la composition, par suite d'une réaction d'échange de cations entre le catalyseur (C1) et cet autre composé, étant par exemple le durcisseur ou la résine. La réaction d'échange peut avoir lieu *in situ* dans la composition ou être mise en œuvre préalablement à sa préparation. L'espèce activée issue du catalyseur (C1) préférée résulte de la réaction entre l'acétate de zinc et un mélange de dimères et trimères d'acide gras, tel que celui commercialisé sous la dénomination Pripol® 1040 par Croda.

Le catalyseur (C2) comprend au moins un élément (M2) choisi parmi les métaux alcalins et alcalino-terreux. De préférence, l'élément (M2) est choisi parmi les métaux alcalins et encore plus préférentiellement parmi Li, Na et K.

Selon un mode de réalisation, le catalyseur (C2) un composé de l'élément (M2) choisi parmi les sels organiques ou inorganiques, avantageusement hydratés, les complexes organiques ou inorganiques et leurs mélanges. Ces sels et complexes peuvent être choisis parmi ceux cités précédemment vis-à-vis du catalyseur (C1).

Le catalyseur (C2) est un composé de l'élément (M2) choisi parmi : les phosphates, les carbonates, les oxydes, les hydroxydes, les sulfures ; les carboxylates comportant au moins une fonction -COO⁻ portée par une chaîne hydrocarbonée présentant de 1 à 40 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les alcoolates comportant au moins une fonction -O⁻ portée par une chaîne hydrocarbonée présentant de 1 à 20 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les acétylacétonates ; les dikétiminates ; et leurs mélanges Comme catalyseurs (C2) convenant particulièrement à la mise en œuvre de l'invention, on peut citer l'acétylacétonate de lithium, l'acétylacétonate de sodium, l'acétylacétonate de potassium et leurs mélanges.

Selon une variante des modes de réalisation ci-dessus, le catalyseur (C2) est introduit dans la composition sous forme d'une espèce activée, telle que définie précédemment. L'espèce activée issue du catalyseur (C2) préférée résulte de la réaction entre l'acétate de lithium, sodium ou potassium et un mélange de dimères et trimères d'acide gras, tel que celui commercialisé sous la dénomination Pripol® 1040 de Croda.

La teneur totale en catalyseurs (C1) et (C2) dans la composition peut représenter de 1 à 70% en poids, de préférence de 1 à 50% en poids, de préférence encore de 1 à 25% en poids, relativement au poids total de la composition.

Lorsque la composition comprend une espèce activée par au moins un des catalyseurs (C1) ou (C2), voire par les deux, cette espèce étant par exemple le durcisseur ou la résine, l'espèce activée peut représenter de 30 à 70% en poids relativement au poids total de la composition.

Selon un mode de réalisation dans lequel la composition comprend au moins un durcisseur de type acide carboxylique (comportant au moins une fonction C(O)OH) ou de type anhydride d'acide carboxylique (comportant au moins une fonction -C(O)-O-C(O)-) ou les deux, le ratio du nombre de moles d'atomes d'éléments (M1) et (M2) par mole de fonctions -C(O)OH ou par 0,5 mole de fonctions -C(O)-O-C(O)- du durcisseur va de 1 à 50 %, avantageusement de 2 à 25%, de préférence de 5 à 20%.

Selon un mode de réalisation, le ratio en poids de catalyseur (C1) relativement au poids de catalyseur (C2) va de 1:10 à 10:1, de 1:2 à 2:1, étant de préférence de 1:1.

Les catalyseurs (C1) et (C2) sont généralement sous forme solide ou liquide. Lorsqu'ils sont sous forme solide, ils sont de préférence sous forme d'une poudre finement divisée.

Les catalyseurs (C1) et (C2) peuvent être homogènes ou hétérogènes, étant de avantageusement homogènes, de préférence dans la même phase que la résine et/ou le durcisseur.

### Résine thermodurcissable

Selon un mode de réalisation, la composition de l'invention comprend au moins une résine thermodurcissable. Cette résine thermodurcissable peut avantageusement comporter au moins une et avantageusement plusieurs fonctions époxyde et optionnellement au moins une et avantageusement plusieurs fonctions hydroxyles libres et/ou fonctions ester. On désignera une telle résine par « résine époxy ».

De façon avantageuse, la résine époxy représente au moins 10 % en poids, au moins 20 % en poids, au moins 40 % en poids, au moins 60 % en poids, voire 100% en poids, du poids total de résine thermodurcissable présente dans la composition.

Par « résine époxy » au sens de l'invention, on entend une molécule contenant au moins un groupe époxyde (également appelé oxirane ou éthoxyline), qui peut être représenté comme suit : 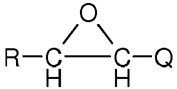 avec Q=H ou Q=R', R et R' étant des groupements organiques.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique.

Les résines époxy glycidyle sont préparées par une réaction de condensation d'un diol, diacide ou diamine avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

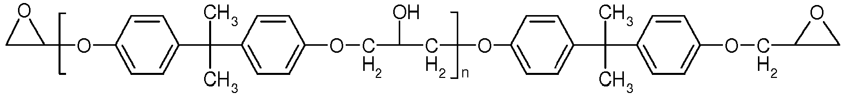

Les résines à base de DGEBA ont d'excellentes propriétés électriques, un faible retrait, une bonne adhérence sur de nombreux métaux et une bonne résistance à l'humidité, aux chocs mécaniques et une bonne résistance thermique.

Les propriétés des résines DGEBA dépendent de la valeur du degré de polymérisation n, qui lui-même dépend de la stœchiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

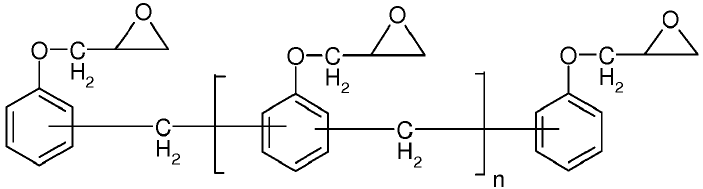

Les résines époxy Novolac contiennent généralement plusieurs groupes époxyde. Les multiples groupes époxyde permettent de réaliser des résines thermodurcies de haute densité de réticulation. Les résines époxy Novolac sont largement utilisées pour fabriquer des matériaux pour la microélectronique en raison de leur résistance supérieure à une température élevée, de leur excellente aptitude au moulage, et de leurs propriétés supérieures mécaniques, électriques, de résistance à la chaleur et à l'humidité.

La résine thermodurcissable utilisable dans la présente invention peut par exemple être choisie parmi : les résines époxy Novolac, le bisphénol A diglycidyl éther (DGEBA), le bisphénol A diglycidyl éther hydrogéné, le bisphénol F diglycidyl éther, le tétraglycidyl méthylène dianiline, le pentaérythritol tétraglycidyl éther, le triméthylol triglycidyl ether (TMPTGE), le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphenol A polyéthylène glycol diglycidyl éther, le bisphénol A polypropylèneglycol diglycidyl éther, le diglycidyl ester d'acide téréphtalique, le poly(glycidyle-acrylate), le poly(glycidyle-méthacrylate), les acides gras polyinsaturés époxydés, les huiles végétales époxydées notamment l'huile de soja époxydée, les huiles de poissons époxydées, et le limonène époxydé; les glycidyl esters de l'acide versatique tels que ceux commercialisés sous la dénomination CARDURA® E8, E10 ou E12 par la société Momentive (CARDURA® E10 de CAS 26761-45-5) ; les résines cycloaliphatiques époxydées commercialisées sous la dénomination ARALDITE® CY179, CY184, MY0510 et MY720 par la société BASF, les résines CY179 et la CY184 répondant respectivement aux formules suivantes : 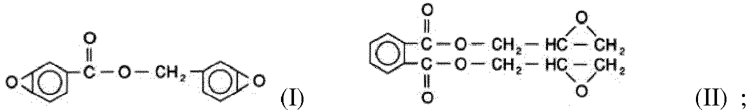 le triglycidyl isocyanurate (TGIC) ; le glycidyl méthacrylate, les glycidyls de (meth)acrylates alkoxylés ; les C8-C10 alkyl glycidyl ethers, les C12-C14 alkyl glycidyl ethers, le neodecanoic acid glycidyl ester, le butyl glycidyl ether, le cresyl glycidyl ether, le phenyl glycidyl ether, le p-nonyphenyl glycidyl ether, le p-nonylphenyl glycidyl ether, le p-t-butyl phenyl glycidyl ether, le 2-ethylhexyl glycidyl ether, le neopentyl glycol diglycidyl ether, le diglycidyl ester de dimère d'acide, le cyclohexane dimethanol diglycidyl ether, l'ether polyglycidyl aliphatique, l'ether polyglycidyl d'huile de riçin ; et les mélanges des résines précitées.

Avantageusement, elle est plus particulièrement choisie parmi : le DGEBA, le bisphénol F diglycidyl éther, les résines Novolac, le TMPTGE, le 1,4-butanediol diglycidyl éther, l'ARALDITE®CY184 de formule (II) ci-dessus, le TGIC, l'huile de soja époxydée et leurs mélanges.

La résine thermodurcissable peut représenter avantageusement de 10 % à 90 % en poids, notamment de 20 % à 80 % en poids voire de 30 à 70 % en poids, relativement au poids total de la composition. Le complément à 100 % en poids de la composition est apporté par les catalyseurs (C1) et (C2), le durcisseur éventuel et les composés additionnels éventuels tels que ceux décrits plus loin.

### Durcisseur

Selon un mode de réalisation, la composition de l'invention comprend au moins un durcisseur. Ce durcisseur peut avantageusement être choisi parmi les durcisseurs comprenant au moins deux fonctions acides carboxyliques -C(O)OH ou au moins une fonction anhydride d'acide -C(O)-O-C(O)- et leurs mélanges. Un tel durcisseur sera communément appelé « durcisseur acide ».

Selon un mode de réalisation, le durcisseur acide comprend au moins trois fonctions acides (qu'elles soient sous forme acide carboxylique libre ou anhydride d'acide). Ceci permet de créer un réseau tridimensionnel lorsqu'un tel durcisseur est employé pour réticuler une résine thermodurcissable.

Selon un mode de réalisation particulier, le durcisseur acide est choisi parmi les durcisseurs acides à chaîne longue, comportant typiquement de 2 à 40 atomes de carbone. Ceci permet d'obtenir des résines thermodurcies souples (réseaux modérément réticulés à basse Tg) lorsqu'un tel durcisseur est employé pour réticuler une résine thermodurcissable.

Comme durcisseurs acides utilisables conformément à l'invention, on peut citer les acides carboxyliques comprenant de 2 à 40 atomes de carbone, les dérivés d'acides gras ainsi que leurs mélanges.

On peut aussi utiliser comme durcisseurs acides des diacides linéaires tels que les acides glutarique, adipique, pimélique, subérique, azélaïque, sébacique, succinique, dodécanedioïque et leurs homologues de masses supérieures ; et leurs mélanges.

On peut également utiliser comme durcisseurs acides des diacides aromatiques tels que l'acide orto- meta- ou paraphtalique, l'acide trimellitique, l'acide téréphtalique ou l'acide naphtalènedicarboxylique, ainsi que leurs dérivés plus ou moins alkylés et/ou partiellement hydrogénés, par exemple l'acide (methyl)tetrahydrophtalique, l'acide (methyl)hexahydrophtallique, l'acide (methyl)nadique; et leurs mélanges.

Par « dérivé d'acide gras », en référence au durcisseur acide, on entend de préférence un acide gras, un ester d'acide gras, un triglycéride, un ester d'acide gras et d'alcool gras, un oligomère d'acide gras, notamment un dimère d'acide gras (oligomère de 2 monomères identiques ou différents) ou un trimère d'acide gras (oligomère de 3 monomères identiques ou différents), et leurs mélanges.

On peut ainsi utiliser comme durcisseurs acides des trimères d'acides gras ou un mélange de dimères et trimères d'acides gras, comprenant avantageusement de 2 à 40 atomes de carbone, avantageusement d'origine végétale. Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin, colza, maïs, tournesol, soja, pépins de raisin, lin, jojoba, ainsi que les acides eicosapentaénoïque et docosahexaénoïque que l'on trouve dans les huiles de poissons ; et leurs mélanges.

On peut citer comme exemple de trimère d'acide gras, le composé de formule suivante, qui illustre un trimère cyclique issu d'acides gras à 18 atomes de carbone, sachant que les composés disponibles dans le commerce sont des mélanges d'isomères stériques et d'isomères de position de cette structure, éventuellement partiellement ou totalement hydrogénés.

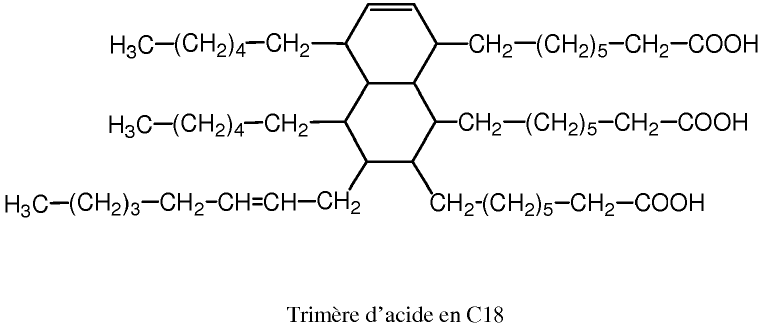

On peut par exemple utiliser un mélange d'oligomères d'acides gras contenant des dimères, trimères et monomères d'acides gras en C18 linéaires ou cycliques, ledit mélange étant majoritaire en dimères et trimères et contenant un faible pourcentage (habituellement, moins de 5%) de monomères. De manière préférée, ledit mélange comprend :
- 0,1 à 40% en poids, de préférence 0,1 à 5% en poids de monomères d'acides gras identiques ou différents,
- 0,1 à 99% en poids, de préférence 18 à 85% en poids de dimères d'acides gras identiques ou différents, et
- 0,1 à 90% en poids, de préférence 5 à 85% en poids, de trimères d'acides gras identiques ou différents.

On peut citer, comme exemples de mélanges dimères/trimères d'acides gras (% en poids) :
- le Pripol® 1017 de Croda, mélange de 75-80% de dimères et 18-22% de trimères avec de l'ordre de 1-3 % d'acides gras monomères,
- le Pripol® 1048 de Croda, mélange de 50/50% de dimères/trimères,
- le Pripol® 1013 de Croda, mélange de 95-98% de dimères et de 2-4% de trimères avec 0,2 % maximum d'acides gras monomères,
- le Pripol® 1006 de Croda, mélange de 92-98% de dimères et d'un maximum de 4% de trimères avec 0,4 % maximum d'acides gras monomères,
- le Pripol® 1040 de Croda, mélange de dimères et de trimères d'acide gras avec au moins 75% de trimères et moins de 1% d'acides gras monomères,
- l'Unidyme® 60 d'Arizona Chemicals, mélange de 33% de dimères et de 67% de trimères avec moins de 1% d'acides gras monomères,
- l'Unidyme® 40 d'Arizona Chemicals, mélange de 65% de dimères et de 35% de trimères avec moins de 1% d'acides gras monomères,
- l'Unidyme® 14 d'Arizona Chemicals, mélange de 94% de dimères et de moins de 5% de trimères et autres oligomères supérieurs avec de l'ordre de 1% d'acides gras monomères,
- l'Empol® 1008 de Cognis, mélange de 92% de dimères et de 3% d'oligomères supérieurs, essentiellement des trimères, avec de l'ordre de 5% d'acides gras monomères,
- l'Empol® 1018 de Cognis, mélange de 81 % de dimères et de 14% d'oligomères supérieurs, dont essentiellement des trimères, avec de l'ordre de 5 % d'acides gras monomères,
- le Radiacid® 0980 d'Oleon, mélange de dimères et trimères avec au moins 70% de trimères.

Les produits Pripol®, Unidyme®, Empol®, et Radiacid® comprennent des monomères d'acides gras en C18 et des oligomères d'acides gras correspondant à des multiples de C18.

On peut également citer comme durcisseurs acides les polyoxoalkylènes (polyoxoéthylène, polyoxopropylène, ...) comportant des fonctions acides carboxyliques aux extrémités, les polymères comportant des fonctions acides carboxyliques aux extrémités, ayant une structure branchée ou non, avantageusement choisis parmi les polyesters et polyamides et de préférence parmi les polyesters ; et leurs mélanges.

On peut encore citer au titre de durcisseur acide l'acide phosphorique.

Selon un autre mode de réalisation, le durcisseur acide est choisi parmi des anhydrides. Lorsqu'un tel durcisseur est employé pour réticuler une résine thermodurcissable, ceci permet d'obtenir des résines thermodurcies dures (réseaux réticulés avec une Tg supérieure à l'ambiante, soit environ 20°C).

On peut notamment citer comme durcisseurs acides de type anhydride les anhydrides cycliques, comme par exemple l'anhydride phtalique, l'anhydride méthylnadique, l'anhydride dodécénylsuccinique (DDSA), l'anhydride glutarique; les anhydrides aromatiques partiellement ou totalement hydrogénés comme l'anhydride (methyl)tetrahydrophtalique, l'anhydride (methyl)hexahydrophtalique; et leurs mélanges. On peut notamment utiliser les anhydrides de formules suivantes, et leurs mélanges.

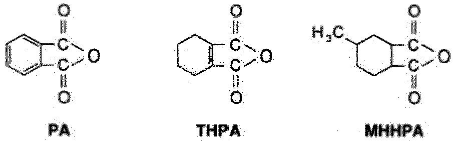

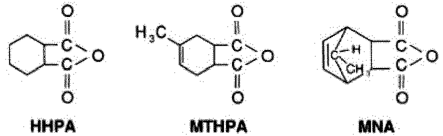

On peut encore citer comme durcisseurs acides de type anhydride l'anhydride succinique, l'anhydride maléique, l'anhydride trimellitique, l'adduit d'anhydride trimellitique et d'éthyleneglycol, l'anhydride chlorendique, l'anhydride nadique, l'anhydride tetrachlorophtalique, le dianhydride pyromellitique (PMDA), le dianhydride d'acide 1,2,3,4 cyclopentanetétracarboxylique, les polyanhydrides d'acides aliphatiques tels que le polyanhydride polyazélaique, le polyanhydride polysébacique et leurs mélanges.

On peut encore citer comme durcisseur acide de type anhydride le durcisseur de référence commerciale HY905 vendu par BASF, qui et un mélange liquide de plusieurs anhydrides.

Avantageusement, le durcisseur acide est plus particulièrement choisi parmi : les polyoxoalkylènes comportant des fonctions acides carboxyliques aux extrémités et les polyesters comportant des fonctions acides carboxyliques aux extrémités ; l'acide terephtalique, l'acide adipique, l'acide sébacique, l'acide succinique, l'acide glutarique, les oligomères d'acides gras, en particulier les dimères et trimères d'acides gras ; les anhydrides (hydro)phtaliques, le MHHPA, le MNA, le MTHPA, en particulier le MTHPA sous forme d'un mélange d'isomères de positions du groupement méthyl et de la double liaison, et leurs mélanges.

Le durcisseur peut représenter avantageusement de 10 % à 90 % en poids, notamment de 20 % à 80 % en poids voire de 30 à 70 % en poids, relativement au poids total de la composition.

Selon un mode de réalisation, la composition comprend, voire est constituée par, au moins les catalyseurs (C1) et (C2), un durcisseur acide et optionnellement une résine thermodurcissable époxy, tels que définis plus haut : selon ce mode, le nombre de moles d'atomes des éléments (M1) et (M2) peut aller de 1 à 50 %, de préférence de 1 à 25%, de préférence de 5 à 20 %, relativement au nombre de moles de fonctions acide carboxylique du durcisseur (ou à son nombre de moles de fonctions anhydride divisé par 2). Lorsque la composition comprend en outre la résine, le nombre de moles de fonctions époxydes de la résine peut aller de 50 à 150%, de préférence de 75% à 125%, de préférence de 90 à 110 %, relativement au nombre de moles de fonctions acide carboxylique du durcisseur (ou à son nombre de moles de fonctions anhydride divisé par 2).

### Composés additionnels

La composition de l'invention peut éventuellement comprendre un ou plusieurs composés additionnels, dans la mesure où leur présence n'altère pas les propriétés avantageuses qui découlent de l'invention.

Ces composés additionnels peuvent notamment être choisis parmi : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

Ces composés additionnels peuvent représenter de 1 à 90 %, de 1 à 70 %, de 1 à 50 % voire de 1 à 25 % du poids total de la composition.

Parmi les polymères qui peuvent être employés en mélange avec la composition de l'invention, on peut mentionner : des élastomères, des thermoplastiques, des élastomères thermoplastiques, des additifs chocs.

Par pigments, on entend des particules colorées insolubles dans la composition de l'invention. Comme pigments utilisables selon l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments

Par colorants, on entend des molécules solubles dans la composition de l'invention et ayant la capacité d'absorber une partie du rayonnement visible.

Parmi les charges qui peuvent être employées dans la composition de l'invention, on peut mentionner : la silice, les argiles, le noir de carbone, le kaolin, le talc, les whiskers et leurs mélanges.

Parmi les fibres qui peuvent être employées dans la composition de l'invention, on peut mentionner : des fibres de verre, des fibres de carbone, des fibres polyester, des fibres polyamides, des fibres aramides, des fibres cellulosiques et nanocellulosiques ou encore des fibres végétales (lin, chanvre, sisal, bambou...) et leurs mélanges.

La présence, dans la composition de l'invention, de pigments, de colorants ou de fibres capables d'absorber le rayonnement, ou leurs mélanges, peut servir à assurer le chauffage d'un matériau ou d'un objet fabriqué à partir d'une telle composition, au moyen d'une source de rayonnement telle qu'un laser.

La présence, dans la composition de l'invention, de pigments, de fibres ou de charges conductrices de l'électricité tels que noir de carbone, nanotubes de carbone, fibres de carbone, poudres métalliques, particules magnétiques ou leurs mélanges, peut être utilisée pour assurer le chauffage d'un matériau ou d'un objet fabriqué à partir d'une telle composition, par effet Joule, par induction ou par micro-ondes. Un tel chauffage peut permettre la mise en œuvre d'un procédé de fabrication, de transformation ou de recyclage d'un matériau ou d'un objet suivant un procédé qui sera décrit plus loin.

Les composés additionnels peuvent aussi être choisis parmi un ou plusieurs autres catalyseurs et/ou durcisseurs, de toutes natures connues de l'homme du métier comme jouant ces rôles dans la mesure ou ils n'altèrent pas les propriétés avantageuses découlant de l'invention. Ils seront désignés par « catalyseur supplémentaire » et « durcisseur supplémentaire ».

On peut notamment mettre en œuvre un ou plusieurs catalyseurs supplémentaires de transestérification et plus préférentiellement des catalyseurs de transestérification permettant la déformation d'une résine thermodurcissable à l'état thermodurci. De tels catalyseurs supplémentaires peuvent être choisis parmi : des phosphines, des aminés, des sels d'ammonium quaternaire et leurs mélanges.

On peut également mettre en œuvre un ou plusieurs catalyseurs supplémentaires qui sont spécifiques de l'ouverture d'époxyde. On peut citer :
- les amines tertiaires, éventuellement bloquées, comme par exemple: le 2,4,6-tris(dimethylaminomethyl)phenol (par exemple commercialisée sous le nom Ancamine), o-(dimethylaminomethyl) phénol, la benzyldimethylamine (BDMA), le 1,4-diazabicyclo(2,2,2)octane (DABCO), le chlorure de méthyltribenzyl ammonium.
- les guanidines cycliques ou non cycliques, comme par exemple le triazabicyclodecene (1,5,7-triazabicyclo[4.4.0]dec-5-ene) (TBD), le 1,1,3,3-tetramethylguanidine.
- les amidines, comme la diazabicycloundecene (DBU).
- les imidazoles, comme les 2-methylimidazole (2-MI), 2-phenylimidazole (2-PI), 2-ethyl-4-methyl-imidazole (EMI), 1-propylimidazole, chlorure de 1-Ethyl-3-methylimidazolium, 1-(2-hydroxypropyl)imidazole.
- les phosphoniums : les halogénures de tetraalkyl et alkyltriphenylphosphonium.
- les sels d'aminé de polyacides, les condensats aniline-formaldéhyde, les N,N-alcanolamines, les borates de trialcanolamines, les fluoroborates comme la monoethylamine de trifluorure de bore (BF3-MEA), les phosphines organosubsituées, les sels de monoimidazoline quaternaire, des mercaptans, des polysulfures.
- et leurs mélanges.

Préférentiellement, le catalyseur d'ouverture d'époxyde est choisi parmi : les amines tertiaires, les guanidines cycliques ou non cycliques, les imidazoles, et leurs mélanges.

Plus préférentiellement, le catalyseur d'ouverture d'époxyde est choisi parmi : le 2,4,6-tris(dimethylaminomethyl)phenol, le o-(dimethylaminomethyl) phénol, la benzyldimethylamine (BDMA), la 2-methylimidazole (2-MI), la 2-phenylimidazole (2-PI), la 2-ethyl-4-methyl-imidazole (EMI) et leurs mélanges.

Selon le mode de réalisation dans lequel la composition comprend une résine thermodurcissable comportant une ou plusieurs fonctions époxyde, lorsque l'on utilise au titre de catalyseur supplémentaire un catalyseur d'ouverture d'époxyde, celui-ci est avantageusement mis en œuvre dans la composition à raison de 0,1% à 5% molaire par rapport au nombre de moles de fonctions époxydes portées par la résine thermodurcissable.

On peut aussi mettre en œuvre un ou plusieurs catalyseurs supplémentaires choisis parmi les catalyseurs cités dans les demandes WO2011/151584, WO2012/101078 et WO 2012/152859, toujours dans la mesure ou leur présence n'altère pas les propriétés avantageuses découlant de l'invention.

Le catalyseur supplémentaire peut par exemple être présent dans la composition de l'invention à raison de 0,1 à 10 % en poids et de préférence de 0,1 à 5 % en poids relativement au poids total de la composition.

Par ailleurs, l'utilisation d'un durcisseur supplémentaire permet d'obtenir, pour les matériaux fabriqués in fine, une large gamme de propriétés mécaniques à la température ambiante (par exemple contrôle de la température de transition vitreuse et/ou du module d'une résine thermodurcie).

Comme exemples de durcisseurs supplémentaires, on peut mentionner les durcisseurs de résine époxy, en particulier ceux choisis parmi les aminés, les polyamides, les acides polycarboxyliques (éventuellement autres que ceux décrits ci-dessus comme durcisseurs acides), les résines phénoliques, les anhydrides (éventuellement autres que ceux décrits ci-dessus comme durcisseurs acides), les isocyanates, les polymercaptans, les dicyanodiamides et leurs mélanges.

En particulier, un durcisseur supplémentaire de type amine peut être choisi parmi les aminés primaires ou secondaires ayant au moins une fonction -NH2 ou deux fonctions -NH et de 2 à 40 atomes de carbone. Ces amines peuvent par exemple être choisies parmi les aminés aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, la diamino diphénylméthane, la diamino diphénylsulfone, la méthylène bischlorodiéthylaniline, la meta-xylylène diamine (MXDA) et ses dérivés hydrogénés tels que le 1,3-bis(aminométhyl cyclohexane) (1,3-BAC) ; et leurs mélanges.

Un durcisseur supplémentaire de type amine peut encore être choisi parmi les polyetheramines, par exemple les JEFFAMINES de Huntsman, éventuellement en mélanges avec d'autres durcisseurs supplémentaires.

Comme durcisseurs supplémentaires préférés, on peut citer la diéthylène triamine, la triéthylène tétramine, l'hexanediamine, et leurs mélanges.

Un durcisseur supplémentaire peut par exemple être présent dans la composition de l'invention à raison de 1 à 50 % en poids, notamment de 1 à 30% en poids et de préférence de 2 à 10 % en poids relativement au poids du durcisseur acide ; lorsque ce dernier est présent dans la composition.

### Procédé de préparation de la composition

Les composés de la composition selon l'invention sont soit disponibles commercialement, soit facilement synthétisables par l'homme du métier à partir de matières premières disponibles commercialement.

La composition de l'invention peut être obtenue par simple mise en contact des composés qu'elle renferme. Cette mise en contact est de préférence effectuée à une température allant de 15°C à 130°C, notamment de 70°C à 125°C et avantageusement de 100°C à 120°C. La mise en contact peut être effectuée avec ou sans moyen d'homogénéisation.

Selon un mode de réalisation particulier, le procédé comprend une première étape au cours de laquelle au moins un des catalyseurs (C1) et (C2) est préintroduit dans la résine ou le durcisseur. Le catalyseur peut être alors sous forme de dispersion s'il s'agit d'une poudre, ou d'une solution. Cette dispersion ou mise en solution peut être effectuée à température ambiante ou à chaud pour obtenir les caractéristiques de viscosité souhaitées.

Selon un autre mode de réalisation particulier, le procédé comprend une première étape de formation d'une espèce activée, comprenant la mise en contact d'un durcisseur ou d'une résine thermodurcissable avec le catalyseur (C1) et/ou (C2), de sorte à complexer l'atome de l'élément (M1) et/ou (M2) du catalyseur dans le durcisseur ou la résine thermodurcissable. Avantageusement, le durcisseur et/ou la résine comporte alors des fonctions susceptibles de libérer des cations pour permettre un échange de ces derniers avec des cations de l'élément (M1) et/ou (M2) du catalyseur.

L'étape de formation d'une espèce activée est de préférence effectuée à une température allant de 15°C à 220°C, notamment de 70°C à 200°C et avantageusement de 80°C à 180°C, par un ou plusieurs paliers successifs.

L'étape de formation d'une espèce activée peut être effectuée avec ou sans moyen d'homogénéisation.

L'étape de formation d'une espèce activée peut avantageusement être mise en œuvre à pression réduite c'est-à-dire inférieure à la pression atmosphérique, allant par exemple de 45 à 55 mbar.

Suivant ce mode de réalisation avec formation d'une espèce activée, le procédé de préparation comprend une seconde étape de mise en contact de l'espèce activée issue de la première étape avec le durcisseur et/ou la résine thermodurcissable et les composés additionnels éventuels, pour obtenir une composition conforme à l'invention. Les conditions de température et d'agitation de cette seconde étape sont les mêmes que celles décrites plus haut pour la préparation d'une composition conforme à l'invention.

### Kits

L'invention a encore pour objet un kit pour la préparation d'une composition conforme à l'invention comportant au moins :
- une première composition comprenant au moins le catalyseur (C1),
- une deuxième composition comprenant au moins le catalyseur (C2),
- une troisième composition comprenant au moins le durcisseur et/ou une quatrième composition comprenant au moins la résine thermodurcissable.

L'invention a aussi pour objet un kit pour la préparation d'une composition destinée à la fabrication d'un objet conforme à l'invention, comportant au moins :
- une première composition comprenant au moins le catalyseur (C1),
- une deuxième composition comprenant au moins le catalyseur (C2),
- une troisième composition comprenant au moins le durcisseur, et
- une quatrième composition comprenant au moins la résine thermodurcissable.

Les différentes compositions peuvent être stockées ensemble ou séparément. Il est aussi possible de stocker ensemble certaines des compositions tout en les maintenant séparées des autres compositions.

Les différentes compositions sont stockées généralement à température ambiante.

De préférence, lorsque les troisième et quatrième compositions sont toutes deux présentes dans le kit, elles sont dans un conditionnement adapté pour empêcher qu'une réaction de réticulation entre la résine thermodurcissable et le durcisseur ne se produise sans intervention d'un opérateur.

Le conditionnement peut consister en un récipient comportant deux voire trois ou quatre compartiments internes permettant le stockage séparé de chacune des compositions.

Selon une variante, le kit peut consister en un seul et unique récipient, contenant un mélange en quantités appropriées des deux, trois ou quatre compositions. Dans ce dernier cas, l'intervention de l'opérateur se limite avantageusement à un chauffage.

Il peut être prévu un moyen permettant la mise en contact des contenus des différents compartiments, avantageusement de façon à permettre d'initier la réticulation dans le récipient quand les deuxième et troisième compositions sont présentes.

On peut aussi prévoir un kit consistant en plusieurs flacons distincts associés dans un même emballage et comportant chacun les quantités adaptées de chacune des compositions pour la préparation de la composition de l'invention, de façon à éviter à l'utilisateur des opérations de pesée et/ou de dosage.

### Utilisations

L'invention a encore pour objet l'utilisation d'une composition conforme à l'invention ou d'un kit tels que décrits ci-dessus pour rendre malléable à chaud une résine thermodurcie, en particulier une résine telle que celles décrites ci-avant.

L'invention a encore pour objet l'utilisation d'une composition conforme à l'invention ou d'un kit selon l'invention pour rendre une résine thermodurcie (autrement dit une résine qui se trouve déjà à l'état thermodurci), déformable à chaud, et exempte de toute contrainte résiduelle après sa déformation. Avantageusement et contrairement à une résine thermodurcie classique, une telle résine conserve sa forme résultant de la déformation, quand bien même cette résine est à nouveau chauffée.

Par déformable « à chaud », on entend à une température (T) supérieure à la température ambiante et préférentiellement supérieure à la température de transition vitreuse Tg de la résine thermodurcie.

Les températures de transitions vitreuses (Tg) des résines utilisées dans la présente invention peuvent être obtenues à partir de mesures thermomécaniques (DMTA) connues de l'homme de l'art. Elles peuvent être déterminées en prenant la température au pic de la tangente delta. L'appareil utilisé peut être un Rheometric Scientific RDA3 en mode torsion rectangulaire avec une fréquence de 1Hz et un taux de déformation de 0,08%, sur une plage de température de -100°C à 250°C. Les dimensions de l'échantillon parallélépipédique sont : 25mm x 6mm x 4mm.

### Objets et leurs procédés de fabrication

L'invention a encore pour objet un objet comprenant une résine thermodurcie obtenu à partir d'au moins une composition conforme à l'invention.

Par « objet », on entend au sens de la présente invention, une pièce en trois dimensions. On inclut dans cette définition les revêtements, les films, les feuilles, les rubans, etc. Les objets selon l'invention peuvent notamment consister en des revêtements déposés sur un support, comme une couche de protection, une peinture ou encore un film adhésif. On inclut également les poudres, les granulés, etc...

L'objet selon l'invention est déformable à chaud.

L'invention se rapporte également à un procédé de fabrication d'un objet comprenant :
a) la préparation ou la mise à disposition d'une composition conforme à l'invention comprenant au moins la résine thermodurcissable, le durcisseur et les catalyseurs (C1) et (C2),
b) la mise en forme de la composition issue de l'étape a)
c) l'application d'une énergie permettant le durcissement de la résine,
d) le refroidissement de la résine thermodurcie.

Les étapes a) b) c) du procédé peuvent être successives ou simultanées.

L'invention concerne aussi un objet susceptible d'être obtenu par ce procédé.

La préparation de la composition peut se faire dans un mélangeur de tout type connu de l'homme du métier.

La préparation de la composition peut se faire par mise en contact des compositions décrites en relation avec le kit de manière à former une composition selon l'invention.

La mise en forme peut être mise en œuvre par toute technique connue de l'homme du métier dans le domaine des résines thermodurcissables, notamment par moulage. Notablement, l'invention permet de prévoir également d'autres modes de mise en forme tels que le coulage, l'enroulement filamentaire, le moulage en continu ou entre pellicules, l'infusion, la pultrusion, RTM (resin transfer molding), RIM (réaction-injection-moulage) ou toutes autres méthodes connues de l'homme de l'art, telles que décrites dans les ouvrages «Epoxy Polymer», édité par J.P. Pascault et R.J.J. Williams, Wiley-VCH, Weinheim 2010 ou «Chimie industrielle », par R. Perrin et J.P. Scharff, Dunod, Paris 1999.

La mise en forme peut consister en une mise sous forme de poudre ou de grains par toute technique connue de l'homme du métier. Un broyage mécanique peut également être effectué à l'issue de l'étape d).

Pour ce qui concerne la mise en forme de la composition sous forme de revêtement, on peut avantageusement mettre en œuvre toute méthode connue en la matière, en particulier : l'application de la composition à la brosse ou au rouleau ; le trempage d'un support à revêtir dans la composition ; l'application de la composition sous forme d'une poudre.

Si l'on essaye de mettre en forme une composition de résine thermodurcissable de l'art antérieur de la même manière que décrit plus haut, une fois la résine durcie, le matériau ou l'objet obtenu n'est plus déformable ni réparable, ni recyclable. En effet, une fois que le point de gel de la résine est atteint ou dépassé, le matériau ou l'objet en résine thermodurcissable de l'art antérieur n'est plus ni déformable ni réparable, ni recyclable. L'application d'une température modérée à un tel objet selon l'art antérieur ne conduit à aucune transformation observable ou mesurable, et l'application d'une température très élevée conduit à la dégradation de ce objet.

Au contraire, les objets de l'invention, du fait qu'ils sont fabriqués à partir d'une composition conforme à l'invention, peuvent être déformés, soudés, réparés et recyclés par une élévation de leur température.

Par « application d'une énergie permettant le durcissement de la résine » on entend généralement une élévation de température. L'application d'une énergie permettant le durcissement de la résine peut par exemple consister en un chauffage à une température allant de 50 à 250°C. On peut aussi effectuer une activation par radiations, par exemple par rayons UV ou faisceau électronique, ou par voie chimique, en particulier radicalaire, par exemple au moyen de peroxydes.

Le refroidissement de la résine thermodurcie est habituellement opéré en laissant le matériau ou l'objet revenir à la température ambiante, avec ou sans utilisation d'un moyen de refroidissement.

Un objet conforme à l'invention peut être composite. Il peut notamment résulter de l'assemblage d'au moins deux objets, dont l'un au moins, et avantageusement les deux, comporte au moins une résine thermodurcie obtenue à partir d'au moins une composition conforme à l'invention.

Il s'agit par exemple d'un matériau sandwich, comportant une superposition en alternance de couches de résine thermodurcie obtenue à partir d'au moins une composition conforme à l'invention, avec des couches de bois, de métal, ou de verre.

Un objet de l'invention peut également comprendre un ou plusieurs composants additionnels choisis parmi ceux précités et en particulier: des polymères, des pigments, des colorants, des charges, des plastifiants, des fibres longues ou courtes, tissées ou non, des agents retardateurs de flamme, des agents antioxydants, des lubrifiants, du bois, du verre, des métaux. Lorsqu'un tel objet est fabriqué conformément à l'un des procédés de fabrication décrits plus haut, les composés additionnels peuvent être introduits avant, pendant ou après l'étape a).

### Procédé de déformation

Les compositions de l'invention présentent l'avantage de présenter une variation lente de viscosité sur une large gamme de température, ce qui rend le comportement d'un objet de l'invention comparable à celui des verres inorganiques et permet de leur appliquer des procédés de déformation qui ne sont généralement pas applicables aux thermodurs classiques.

D'un point de vue pratique, cela implique que dans une large gamme de température, un objet conforme à l'invention peut être façonné en appliquant des contraintes de l'ordre de 1 à 10 MPa sans pour autant couler sous son propre poids.

De la même façon, on peut déformer cet objet à une température supérieure à la température Tg, puis dans un deuxième temps éliminer les contraintes internes à une température plus élevée.

Sans pour autant être tenus à cette explication, les inventeurs pensent que les échanges de transestérification sont à l'origine du fluage et de la variation de viscosité à hautes températures. En termes d'application, les objets de l'invention peuvent être traités à des températures élevées. La faible viscosité de ces objets à ces températures permet notamment l'injection ou le moulage sous presse. Il faut noter qu'aucune dépolymérisation n'est constatée à des températures élevées et les objets de l'invention conservent leur structure réticulée (ce qui n'est pas le cas avec des réactions de Diels-Alder). Cette propriété permet la réparation d'un objet de l'invention qui se trouverait fracturé en au moins deux parties par un simple soudage de ces parties entre elles. Aucun moule n'est nécessaire pour maintenir la forme des objets de l'invention pendant le processus de réparation à des températures élevées. De la même façon, on peut transformer un objet de l'invention par application d'une contrainte mécanique à une partie seulement de l'objet sans faire appel à un moule car les objets de l'invention ne coulent pas. Toutefois, les objets de grande taille, qui ont davantage tendance à s'affaisser, pourront être maintenus par un bâti comme pour le travail du verre.

Ainsi, l'invention a également pour objet un procédé de déformation d'au moins un objet tel que décrit plus haut, ce procédé comprenant : l'application à l'objet d'une contrainte mécanique à une température (T) supérieure à la température ambiante.

L'assemblage, le soudage, la réparation et le recyclage constituent un cas particulier du procédé de déformation d'objets selon l'invention.

De préférence, pour permettre la déformation dans une durée compatible avec une application industrielle, le procédé de déformation comprend l'application au objet de l'invention d'une contrainte mécanique à une température (T) supérieure à la température de transition vitreuse Tg de la résine thermodurcie qu'il contient.

Habituellement, un tel procédé de déformation est suivi d'une étape de refroidissement jusqu'à la température ambiante, éventuellement avec application d'au moins une contrainte mécanique.

Par « contrainte mécanique », on entend au sens de la présente invention, l'application d'une force mécanique, localement ou sur tout ou partie de l'objet, cette force mécanique tendant à une mise en forme ou une déformation de l'objet. Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement. Il peut s'agir par exemple d'une torsion appliquée à objet de l'invention sous forme de ruban. Il peut s'agir d'une pression appliquée à l'aide d'une plaque ou d'un moule sur une ou plusieurs faces d'un objet de l'invention, de l'estampage d'un motif dans une plaque ou une feuille. Il peut encore s'agir d'une pression exercée parallèlement sur deux objets de l'invention en contact l'un avec l'autre de façon à provoquer un soudage de ces objets. Dans le cas où l'objet de l'invention consiste en des granulés, la contrainte mécanique peut consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille d'objet de l'invention. La contrainte mécanique peut également consister en une multiplicité de contraintes distinctes, de même nature ou non, appliquées de façon simultanée ou successive à tout ou partie du objet de l'invention, ou de façon localisée.

Le procédé de déformation conforme à l'invention peut inclure une étape de mélange ou d'agglomération de l'objet de l'invention avec un ou plusieurs composants additionnels choisis parmi ceux cités précédemment et en particulier : des polymères, des pigments, des colorants, des charges, des plastifiants, des fibres longues ou courtes, tissées ou non, des agents retardateurs de flamme, des agents antioxydants, des lubrifiants.

L'élévation de la température dans le procédé de déformation peut être réalisée par tout moyen connu comme le chauffage par conduction, convection, induction, par point, infra rouge, micro-onde ou radiant. Les moyens permettant de provoquer une élévation de température pour la mise en œuvre des procédés de l'invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant...L'élévation de température peut être faite par pallier ou non et sa durée est adaptée au résultat attendu en fonction des indications suivantes et des exemples détaillés ci-dessous.

Bien que la résine ne coule pas durant sa déformation, grâce aux réactions de transestérification, en choisissant une température, une durée de chauffage et des conditions de refroidissement appropriées, la nouvelle forme peut être exempte de toute contrainte résiduelle. L'objet n'est donc pas fragilisé ou fracturé par l'application de la contrainte mécanique. Et si l'objet déformé est ultérieurement réchauffé, il ne reviendra pas à sa forme première. En effet, les réactions de transestérification qui surviennent à haute température favorisent une réorganisation des points de réticulation du réseau de la résine thermodurcie de manière à annuler les contraintes mécaniques. Une durée de chauffage suffisante permet d'annuler complètement ces contraintes mécaniques internes à l'objet qui ont été causées par l'application de la contrainte mécanique externe.

Cette méthode permet donc d'obtenir des formes complexes stables, difficiles voire impossibles à obtenir par moulage, à partir de formes élémentaires plus simples. Notamment, il est très difficile d'obtenir par moulage des formes résultant d'une torsion.

De façon complémentaire, le choix de conditions de température, de durée de chauffage sous contrainte et de refroidissement appropriées permet de transformer un objet de l'invention tout en contrôlant la persistance de certaines contraintes mécaniques internes au sein de ce objet, puis, si l'objet ainsi transformé est ultérieurement réchauffé, une nouvelle déformation contrôlée de ce objet par libération contrôlée des contraintes peut être opérée.

### Procédés de recyclage

Un objet de l'invention peut également être recyclé :
- soit par traitement direct de l'objet : par exemple un objet de l'invention cassé ou endommagé est réparé par un procédé de déformation tel que décrit ci-dessus et peut ainsi retrouver sa fonction d'usage antérieure ou une autre fonction ;
- soit l'objet est réduit en particules par application d'un broyage mécanique, et les particules ainsi obtenues sont ensuite mises en œuvre dans un procédé de fabrication d'un objet conforme à l'invention. Notamment, selon ce procédé, les particules sont soumises simultanément à une élévation de température et à une contrainte mécanique permettant leur transformation en un objet conforme à l'invention.

La contrainte mécanique permettant la transformation des particules en objet peut par exemple comporter une compression dans un moule, un malaxage, et/ou une extrusion.

Cette méthode permet notamment, par l'application d'une température suffisante et d'une contrainte mécanique appropriée, de mouler de nouveaux objets à partir des objets de l'invention.

Un autre avantage de l'invention est de permettre de fabriquer des objets à base de résine thermodurcie à partir de matières premières solides. Ces matières premières solides sont ainsi des objets selon l'invention sous forme de pièces, d'une unité élémentaire ou d'un ensemble d'unités élémentaires.

Par « unités élémentaires », on entend des pièces qui ont une forme et/ou un aspect adaptée à leur transformation ultérieure en objet, comme par exemple : particules, granulés, billes, bâtonnets, plaques, feuilles, films, rubans, tiges, tubes etc....

Par « ensemble d'unités élémentaires », on entend au moins 2 unités élémentaire, par exemple au moins 3, au moins 5, au moins 10, voire au moins 100 unités élémentaires.

Tout procédé connu de l'homme du métier peut être employé à cette fin. Ces pièces élémentaires sont ensuite transformables, sous l'action conjointe de la chaleur et d'une contrainte mécanique, en des objets de la forme souhaitée : par exemple, des rubans peuvent par estampage être découpés en pièces plus petites de forme choisie, des feuilles peuvent être superposées et assemblées par compression. Ces pièces élémentaires à base de résine thermodurcie sont plus facilement stockables, transportables et manipulables que les formulations liquides dont elles sont issues. En effet, l'étape de transformation des pièces élémentaires conforme à l'invention peut être réalisée par l'utilisateur final sans équipement de chimie (non toxicité, pas de date de péremption, pas de COV, pas de pesée de réactifs).

L'invention a donc également pour objet un procédé de fabrication d'au moins un objet à base de résine thermodurcie, qui est un cas particulier du procédé de déformation déjà décrit, ce procédé comprenant :
a) l'utilisation comme matière première d'un objet de l'invention sous forme d'une unité élémentaire ou d'un ensemble d'unités élémentaires,
b) l'application simultanée d'une contrainte mécanique et d'une élévation de température pour mettre en forme l'objet pour former un nouvel objet,
c) le refroidissement de l'objet résultant de l'étape b).

Un autre avantage de ce procédé est de permettre le recyclage du nouvel objet fabriqué, celui-ci pouvant être reconditionné sous forme d'unités ou pièces élémentaires qui peuvent à leur tour être remises en forme, conformément à l'invention.

L'invention a donc également pour objet un procédé de recyclage d'un objet de l'invention, ce procédé comprenant :
a) l'utilisation d'un objet de l'invention comme matière première,
b) l'application d'une contrainte mécanique et éventuellement d'une élévation de température simultanée pour transformer cet objet en un ensemble d'unités élémentaires,
c) le refroidissement de cet ensemble d'unités élémentaires.

### Applications

Les domaines d'application de la présente invention sont principalement ceux des résines thermodurcissables, en particulier ceux des résines époxy, notamment l'automobile (ce qui regroupe tout type de véhicule motorisé y compris les poids-lourds), l'aéronautique, le nautisme, l'aérospatiale, le sport, le bâtiment, l'électronique, l'éolien, l'emballage et l'imprimerie.

Les compositions, matériaux et objets de l'invention peuvent par exemple être incorporés dans des formulations, notamment avec des additifs typiques tels que des charges, des antioxydants, des retardateurs de flamme, des protecteurs UV, des pigments, des colorants. Les formulations peuvent par exemple servir au couchage du papier, à la fabrication d'encres, de peintures. Les matériaux ou objets de l'invention peuvent être utilisés sous forme de poudres, de granulés, ou encore être incorporés dans des matériaux composites, en particulier ceux comportant des fibres de verre, de carbone, d'aramide, ou d'origine végétale (fibres de lin, de chanvre,...). Ces fibres peuvent être des fibres longues ou des fibres courtes, tissées ou non. Les compositions de l'invention peuvent aussi être appliquées comme revêtements, par exemple comme vernis de protection des métaux, protection de tuyaux, protections de sols.

Les compositions de l'invention peuvent encore servir à fabriquer des adhésifs, avantageusement ceux thermoréticulables ou photoréticulables, à encapsuler des connecteurs (la composition de l'invention pouvant être appliquée par potting ou injection), à réaliser des pièces d'isolateurs électriques ou encore à réaliser des prototypes.

### EXEMPLES

Les exemples suivants illustrent l'invention sans la limiter.

### 1-1 Catalyseur (C1) avec (M1) = zinc

Dans un réacteur de 1L, on introduit 772,7 g de pripol 1040 (Croda - M_{f} = 297 g/mole de fonctions carboxyliques) et 57,3 g d'acétate de zinc dihydrate (Aldrich - Mw = 219,5 g/mol) soit un ratio [Zn]/[COOH] = 10%. Le mélange est porté à 80°C. La pression est abaissée graduellement jusqu'à 50 mbar tandis que la température de chauffe est montée à 180°C en 1 heure. Après 4 heure de chauffe à 180°C (température du milieu), on recueilli 38,9 g de distillat soit 96 % de la masse attendue. La réaction est arrêtée et le milieu refroidi.

### 1-2 Catalyseur (C2) avec (M2) = lithium

Dans un réacteur de 1L, on introduit 305,7 g de pripol 1040 (Croda - M_{f} = 297 g/mole de fonctions carboxyliques) et 13,63g d'acetate de lithium anhydre (Aldrich - Mw = 66 g/mol) soit un ratio [Li]/[COOH] = 20%. Le mélange est porté à 80°C. La pression est abaissée graduellement jusqu'à 25 mbar tandis que la température de chauffe est montée à 190°C en 1 heure. La distillation de l'acide acétique démarre vers 120°C. Après 1 heure de chauffe à 180°C (température du milieu), on recueilli 12 g de distillat soit 97 % de la masse attendue. La réaction est arrêtée et le milieu refroidi.

### 1-3 Catalyseur (C2) avec (M2) = césium

Dans un réacteur de 1L, on introduit 276 g de pripol 1040 (Croda - M_{f} = 297 g/mole de fonctions carboxyliques) et 35,8g d'acetate de césium anhydre (Aldrich - Mw = 192 g/mol) soit un ratio [Cs]/[COOH] = 20%. Le mélange est porté à 80°C. La pression est abaissée graduellement jusqu'à 25 mbar tandis que la température de chauffe est montée à 180°C en 1 heure. La distillation de l'acide acétique démarre vers 120°C. Après 2 heure de chauffe à 180°C (température du milieu), on recueilli 9,6 g de distillat soit 86 % de la masse attendue. La réaction est arrêtée et le milieu refroidi.

### 2. Préparation de compositions et objets

Les composés mis en œuvre sont le pripol 1040 (Croda - M_{f} = 297 g/mole de fonctions carboxyliques), le DGEBA DER 332 et les sels préparés dans l'exemple 1, dans les proportions indiquées dans les tableaux I et II ci-dessous. Dans un récipient jetable, on introduit les composants de la partie A, préalablement préchauffés à 95°C en étuve. Sous agitation dans un bain-marie d'huile de silicone porté à 115°C, on introduit la partie B non préchauffée (conservé toutefois au-dessus de sa température de cristallisation) puis on porte le milieu à 115°C toujours sous agitation. Lorsque le mélange devient limpide, le milieu est coulé dans un moule en téflon également préchauffé à 95°C en étuve. S'ensuit une cuisson en étuve de 17h à 130°C suivi d'un refroidissement 1h à température ambiante avant démoulage.

**Tableau I (exemples comparatifs)**

| | | | **II-51** | | **II-52** | | **II-S3** | |
|---|---|---|---|---|---|---|---|---|
| **Parties** | **Composant** | **Métal** | **m (g)** | % | **m (g)** | **%** | **m (g)** | **%** |
| **A** | **Pripol 1040** | - | - | - | - | - | - | - |
| | **I-1** | **Zinc** | 26,7 | 63 | - | - | - | - |
| | **I-2** | **Lithium** | - | - | 25,15 | 62,9 | - | - |
| | **I-3** | **Césium** | - | - | - | - | 25,8 | 64,5 |
| **B** | **DGEBA DER 332** | - | 15,7 | 37 | 14,84 | 37,1 | 14,2 | 35,5 |
| | | **TOTAL** | 42,4 | 100 | 39,99 | 100 | 40 | 100 |
| | | **[Metal]**/**[COOH]** | 10% Zn | | 20% Li | | 20% Cs | |

**Tableau II**

| | | | **II-M1** | | **II-M2** | | **II-M3** | |
|---|---|---|---|---|---|---|---|---|
| **Parties** | **Composant** | **Metal** | **m (g)** | **%** | **m (g)** | **%** | **m (g)** | **%** |
| **A** | **Pripol 1040** | **-** | 6,3 | 15,75 | - | - | 6,2 | 15,5 |
| | **I-1** | **Zinc** | 12,6 | 31,5 | 12,6 | 31,5 | - | - |
| | **I-2** | **Lithium** | 6,3 | 15,75 | - | - | 6,3 | 15,75 |
| | **I-3** | **Césium** | - | - | 12,9 | 32 | 12,9 | 32,25 |
| **B** | **DGEBA DER 332** | - | 14,8 | 37 | 14,5 | 36,5 | 14,6 | 36,5 |
| | | **TOTAL** | 40 | 100 | 40 | 100 | 40 | 100 |
| | | **[Metal] / [COOH]** | 5% Li + 5% Zn | | 10%Cs + 5% Zn | | 5% Li + 10% Cs | |

### 3. Test de réticulation

Des échantillons cylindriques des objets fabriqués dans l'exemple 2 ((Ø = 9 mm, h = 6 mm) sont maintenus complètement immergés dans un flacon en verre rempli de trichlorobenzène. Ils sont laissés 21h à 180°C. A température ambiante, les échantillons sont ensuite lavés et séchés puis laissés une nuit à l'étuve à 140°C. Ils sont ensuite pesés. Le tableau III regroupe les résultats obtenus, le taux de gel représentant le pourcentage de la masse résiduelle relativement à la masse initiale de chaque échantillon.

**Tableau III**

| **échantillon** | **taux de gel** (%) |
|---|---|
| **II-51** | 83,7 |
| **II-S2** | 92,1 |
| **II-S3** | 90,4 |
| **II-M1** | 81,5 |
| **II-M2** | 84,8 |

Les valeurs élevées obtenues démontrent un fort taux de réticulation des résines et confirment donc leur état thermodurci.

### 4. Essais de déformation

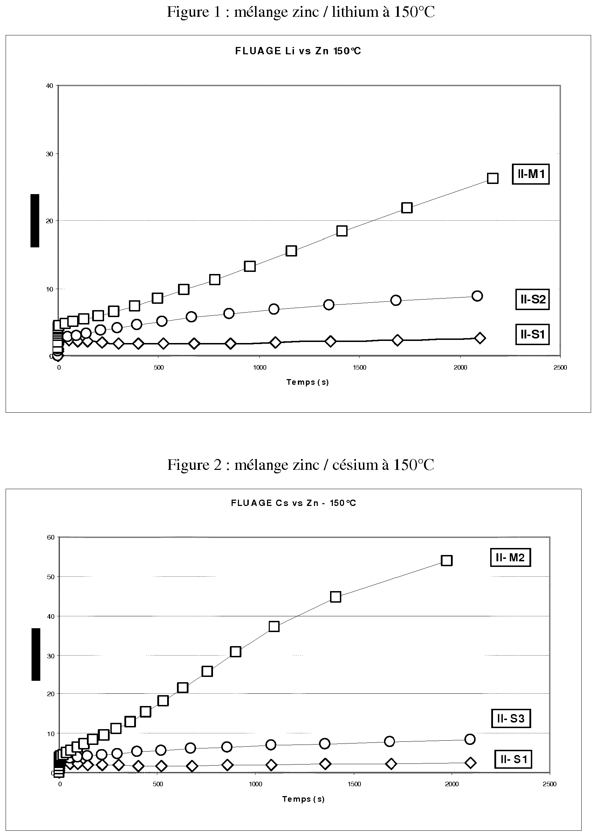

Des essais de fluage des matériaux fabriqués dans l'exemple 2 sont réalisés sur un appareil Metravib DMA50N. Un échantillon cylindrique de diamètre 9 mm et de hauteur 6mm est placé sous une charge constante de ION à température stabilisée (230°C ou 150°C). L'appareil enregistre le taux de déformation de l'échantillon durant un cycle de charge de 2500 secondes. La contrainte appliquée à l'échantillon est de 0,16MPa. Le suivi du pourcentage de déformation des matériaux au cours du temps fait l'objet des figures 1, 2 et 3 annexé.

Les figures 1 et 2 montrent que l'utilisation d'une composition conforme à l'invention permet la déformation du matériau qui en est issu (et donc la possibilité de le mettre en forme) alors que ses propriétés mécaniques sont déjà celles d'une résine thermodurcie.

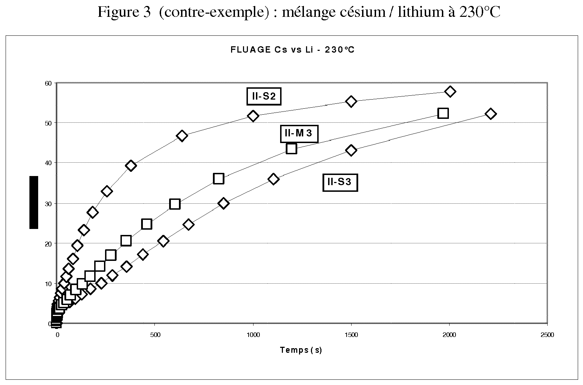

Dans la figure 3, l'échantillon II-M3 comparé aux échantillons II-S2 et II-S3, montre qu'il ne suffit pas de mélanger deux catalyseurs du même type (ici choisis parmi ceux de type (C2)) pour obtenir les effets avantageux de l'invention : c'est bien la présence combinée d'au mois deux catalyseurs de types différents (C1) et (C2) qui permet d'obtenir un effet de synergie, se traduisant par la possibilité de déformer davantage le matériau, sans pour autant le détériorer.

## Revendications

1. Composition comprenant au moins :
- un catalyseur (C1) comprenant au moins un atome d'un élément (M1) choisi parmi : Al, Sc, Ti, Mg, Mn, Fe, Co, Ni, Cu, Zn, Zr, Sn, Hf, Pb, Bi, Sb et In,
- un catalyseur (C2) comprenant au moins un atome d'un élément (M2) choisi parmi les métaux alcalins et les métaux alcalino-terreux,
- le catalyseur (C1) est un composé de l'élément (M1) et le catalyseur (C2) un composé de l'élément (M2), ces composés étant choisis parmi : les phosphates, les carbonates, les oxydes, les hydroxydes, les sulfures ; les carboxylates comportant au moins une fonction -COO portée par une chaîne hydrocarbonée présentant de 1 à 40 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les alcoolates comportant au moins une fonction -O⁻ portée par une chaîne hydrocarbonée présentant de 1 à 20 atomes de carbone, linéaire ou ramifiée, saturée ou insaturée, éventuellement interrompue par un ou plusieurs hétéroatomes choisis parmi N, O, S et P, ou par un ou plusieurs cycles hydrocarbonés saturés, partiellement insaturés ou totalement insaturés ; les acétylacétonates ; les dikétiminates ; et leurs mélanges.
- une résine thermodurcissable et/ou un durcisseur de résine thermodurcissable.

2. Composition selon la revendication 1 **caractérisée en ce que** la teneur totale en catalyseurs (C1) et (C2) représente de 1 à 70% en poids, de préférence de 1 à 50% en poids relativement au poids total de la composition.

3. Composition selon la revendication 1 ou 2, dans laquelle l'élément (M1) est choisi parmi Ti, Mn, Fe, Co, Zn, Zr, Sn et Bi, de préférence parmi Ti, Zn, Zr, Sn et Bi, plus préférentiellement Zn.

4. Composition selon l'une quelconque des revendications précédentes, dans laquelle l'élément (M2) est choisi parmi les métaux alcalins, préférentiellement parmi Li, Na et K.

5. Composition selon l'une quelconque des revendications précédentes, dans laquelle la résine thermodurcissable comporte au moins une et avantageusement plusieurs fonctions époxyde et optionnellement au moins une et avantageusement plusieurs fonctions hydroxyle libre et/ou ester.

6. Composition selon l'une quelconque des revendications précédentes, dans laquelle le durcisseur de résine thermodurcissable est choisi parmi les acides carboxyliques comportant au moins deux fonctions -C(O)OH, les anhydrides d'acides carboxyliques comportant au moins une fonction -C(O)-O-C(O)-, et leurs mélanges.

7. Composition selon la revendication précédente, dans laquelle le ratio du nombre de moles d'atomes d'éléments (M1) et (M2) par mole de fonctions -C(O)OH ou par 0,5 mole de fonctions -C(O)-O-C(O)- va de 1 à 50 %, avantageusement de 2 à 25%, de préférence de 5 à 20%.

8. Composition selon l'une quelconque des revendications précédentes, dans laquelle la teneur en résine thermodurcissable et/ou en durcisseur va de 10% à 90 % en poids, notamment de 20 % à 80 % en poids voire de 30 à 70 % en poids, relativement au poids total de la composition, le complément à 100 % étant apporté par les catalyseurs (C1) et (C2) et éventuellement des composés additionnels.

9. Composition selon l'une quelconque des revendications précédentes, comprenant en outre au moins un composé additionnel choisi parmi : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

10. Composition selon l'une quelconque des revendications précédentes, comprenant en outre : au moins un catalyseur supplémentaire, par exemple choisi parmi des catalyseurs de transestérification, des catalyseurs spécifiques de l'ouverture d'époxydes et leurs mélanges ; et/ou au moins un durcisseur supplémentaire, par exemple choisi parmi des durcisseurs de résines époxy, notamment des durcisseurs de type amine, et leurs mélanges.

11. Composition selon l'une quelconque des revendications précédentes, dans laquelle la résine et/ou le durcisseur est présent sous forme « activée », les atomes des éléments (M1) et/ou (M2) étant complexés par la résine et/ou le durcisseur.

12. Objet comprenant une résine thermodurcie obtenu à partir d'une composition telle que définie dans l'une quelconque des revendications précédentes.

13. Kit pour la préparation d'une composition conforme à l'une quelconque des revendications 1 à 11, comportant au moins :
- une première composition comprenant au moins le catalyseur (C1),
- une deuxième composition comprenant au moins le catalyseur (C2),
- une troisième composition comprenant au moins le durcisseur et/ou une quatrième composition comprenant au moins la résine thermodurcissable.

14. Kit pour la préparation d'une composition destinée à la fabrication d'un objet conforme à la revendication 12, comportant au moins :
- une première composition comprenant au moins le catalyseur (C1),
- une deuxième composition comprenant au moins le catalyseur (C2),
- une troisième composition comprenant au moins le durcisseur et
- une quatrième composition comprenant au moins la résine thermodurcissable, les troisième et quatrième compositions étant de préférence stockées dans des compartiments différents.

15. Procédé de fabrication d'un objet comprenant :
a) la mise à disposition d'une composition conforme à l'une quelconque des revendications 1 à 11 comprenant au moins la résine thermodurcissable, le durcisseur et les catalyseurs (C1) et (C2) ; ou la mise en contact des compositions du kit selon la revendication 14 pour former une telle composition,
b) la mise en forme de la composition issue de l'étape a)
c) l'application d'une énergie permettant le durcissement de la résine,
d) le refroidissement de la résine thermodurcie.

16. Procédé de déformation d'un objet, étant par exemple un procédé d'assemblage, de soudage, de réparation ou de recyclage, comprenant l'application à un objet conforme à l'une quelconque des revendications 12 d'une contrainte mécanique à une température (T) supérieure à la température ambiante et préférentiellement supérieure à la température de transition vitreuse Tg de la résine thermodurcie.

17. Utilisation d'une composition conforme à l'une quelconque des revendications 1 à 11 ou d'un kit selon l'une des revendications 13 et 14 pour rendre une résine thermodurcie, déformable à chaud, et exempte de toute contrainte résiduelle après sa déformation.

18. Utilisation d'un ou plusieurs objets conformes à la revendication 12 ou obtenu selon le procédé conforme à la revendication 15, dans l'automobile, l'aéronautique, le nautisme, l'aérospatiale, le sport, le bâtiment, l'électronique, l'éolien, l'emballage, l'imprimerie.

19. Utilisation d'un ou plusieurs objets conforme à la revendication 12 ou obtenu selon le procédé conforme à la revendication 15, sous forme de formulations, de poudres, de granulés, de revêtements, de matériaux ou de pièces éventuellement composites; en particulier pour fabriquer des adhésifs, encapsuler des connecteurs, fabriquer des isolateurs électriques, ou encore des prototypes.

## Patentansprüche

1. Zusammensetzung, umfassend mindestens:
- einen Katalysator (C1), der mindestens ein Atom eines Elements (M1), das aus A1, Sc, Ti, Mg, Mn, Fe, Co, Ni, Cu, Zn, Zr, Sn, Hf, Pb, Bi, Sb und In ausgewählt ist, umfasst,
- einen Katalysator (C2), der mindestens ein Atom eines Elements (M2), das aus Alkalimetallen und Erdalkalimetallen ausgewählt ist, umfasst,
- wobei es sich bei dem Katalysator (C1) um eine Verbindung des Elements (M1) handelt und es sich bei dem Katalysator (C2) um eine Verbindung des Elements (M2) handelt, wobei diese Verbindungen aus Phosphaten, Carbonaten, Oxiden, Hydroxiden, Sulfiden; Carboxylaten mit mindestens einer -COO⁻-Funktion, die von einer linearen oder verzweigten, gesättigten oder ungesättigten Kohlenwasserstoffkette mit 1 bis 40 Kohlenstoffatomen, die gegebenenfalls durch ein oder mehrere Heteroatome, die aus N, O, S und P ausgewählt sind, oder durch einen oder mehrere gesättigte, teilweise ungesättigte oder vollständig ungesättigte Kohlenwasserstoffringe unterbrochen ist, getragen wird; Alkoholaten mit mindestens einer -O⁻-Funktion, die von einer linearen oder verzweigten, gesättigten oder ungesättigten Kohlenwasserstoffkette mit 1 bis 20 Kohlenstoffatomen, die gegebenenfalls durch ein oder mehrere Heteroatome, die aus N, O, S und P ausgewählt sind, oder durch einen oder mehrere gesättigte, teilweise ungesättigte oder vollständig ungesättigte Kohlenwasserstoffringe unterbrochen ist, getragen wird; Acetylacetonaten; Diketiminaten und Mischungen davon ausgewählt sind;
- ein wärmehärtbares Harz und/oder einen Härter für ein wärmehärtbares Harz.

2. Zusammensetzung nach Anspruch 1, **dadurch gekennzeichnet, dass** der Gesamtgehalt der Katalysatoren (C1) und (C2) 1 bis 70 Gew.-% und vorzugsweise 1 bis 50 Gew.-%, bezogen auf das Gesamtgewicht der Zusammensetzung, beträgt.

3. Zusammensetzung nach Anspruch 1 oder 2, wobei das Element (M1) aus Ti, Mn, Fe, Co, Zn, Zr, Sn und Bi, vorzugsweise aus Ti, Zn, Zr, Sn und Bi, weiter bevorzugt Zn, ausgewählt ist.

4. Zusammensetzung nach einem der vorhergehenden Ansprüche, wobei das Element (M2) aus Alkalimetallen, vorzugsweise aus Li, Na und K, ausgewählt ist.

5. Zusammensetzung nach einem der vorhergehenden Ansprüche, wobei das wärmehärtbare Harz mindestens eine und vorteilhafterweise mehrere Epoxidfunktionen und gegebenenfalls mindestens eine und vorteilhafterweise mehrere freie Hydroxylfunktionen und/oder Esterfunktionen umfasst.

6. Zusammensetzung nach einem der vorhergehenden Ansprüche, wobei der Härter für ein wärmehärtbares Harz aus Carbonsäuren mit mindestens zwei -C(O)OH-Funktionen, Carbonsäureanhydriden mit mindestens einer -C(O)-O-C(O)-Funktion und Mischungen davon ausgewählt ist.

7. Zusammensetzung nach dem vorhergehenden Anspruch, wobei das Verhältnis der Molzahl von Atomen der Elemente (M1) und (M2) pro Mol -C(O)OH-Funktionen oder pro 0,5 mol -C(O)-O-C(O)-Funktionen im Bereich von 1 bis 50 %, vorteilhafterweise von 2 bis 25 %, vorzugsweise von 5 bis 20 %, liegt.

8. Zusammensetzung nach einem der vorhergehenden Ansprüche, wobei der Gehalt an wärmehärtbarem Harz und/oder Härter im Bereich von 10 bis 90 Gew.-%, insbesondere von 20 bis 80 Gew.-% oder sogar von 30 bis 70 Gew.-%, bezogen auf das Gesamtgewicht der Zusammensetzung, liegt, wobei der Rest auf 100 % durch die Katalysatoren (C1) und (C2) und gegebenenfalls zusätzliche Verbindungen beigesteuert wird.

9. Zusammensetzung nach einem der vorhergehenden Ansprüche, die außerdem mindestens eine zusätzliche Verbindung umfasst, die aus Polymeren, Pigmenten, Farbstoffen, Füllstoffen, Weichmachern, langen oder kurzen Web- oder Vliesstofffasern, Flammschutzmitteln, Antioxidantien, Schmiermitteln, Holz, Glas, Metallen und Mischungen davon ausgewählt ist.

10. Zusammensetzung nach einem der vorhergehenden Ansprüche, die außerdem mindestens einen zusätzlichen Katalysator, der beispielsweise aus Umesterungskatalysatoren, spezifischen Epoxidring-öffnungskatalysatoren und Mischungen davon ausgewählt ist, und/oder mindestens einen zusätzlichen Härter, der beispielsweise aus Epoxidharz-Härtern, insbesondere Härtern von Amin-Typ, und Mischungen davon ausgewählt ist, umfasst.

11. Zusammensetzung nach einem der vorhergehenden Ansprüche, wobei das Harz und/oder der Härter in "aktivierter" Form vorliegt, wobei die Atome der Elemente (M1) und/oder (M2) durch das Harz und/oder den Härter komplexiert sind.

12. Gegenstand, umfassend ein aus einer Zusammensetzung gemäß einem der vorhergehenden Ansprüche erhaltenes wärmegehärtetes Harz.

13. Kit zur Herstellung einer Zusammensetzung gemäß einem der Ansprüche 1 bis 11, mindestens umfassend:
- eine erste Zusammensetzung, die mindestens den Katalysator (C1) umfasst,
- eine zweite Zusammensetzung, die mindestens den Katalysator (C2) umfasst,
- eine dritte Zusammensetzung, die mindestens den Härter umfasst, und/oder eine vierte Zusammensetzung, die mindestens das wärmehärtbare Harz umfasst.

14. Kit zur Herstellung einer Zusammensetzung, die für die Herstellung eines Gegenstands gemäß Anspruch 12 bestimmt ist, mindestens umfassend:
- eine erste Zusammensetzung, die mindestens den Katalysator (C1) umfasst,
- eine zweite Zusammensetzung, die mindestens den Katalysator (C2) umfasst,
- eine dritte Zusammensetzung, die mindestens den Härter umfasst, und
- eine vierte Zusammensetzung, die mindestens das wärmehärtbare Harz umfasst,
wobei die dritte Zusammensetzung und die vierte Zusammensetzung vorzugsweise in verschiedenen Kompartimenten aufbewahrt werden.

15. Verfahren zur Herstellung eines Gegenstands, das Folgendes umfasst:
a) Bereitstellen einer Zusammensetzung gemäß einem der Ansprüche 1 bis 11, die mindestens das wärmehärtbare Harz, den Härter und die Katalysatoren (C1) und (C2) umfasst; oder Inkontaktbringen der Zusammensetzungen des Kits gemäß Anspruch 14 zur Bildung einer derartigen Zusammensetzung,
b) Formen der Zusammensetzung aus Schritt a),
c) Anwenden einer Energie, die die Härtung des Harzes gestattet,
d) Abkühlen des wärmegehärteten Harzes.

16. Verfahren zum Verformen eines Gegenstands, wobei es sich beispielsweise um ein Montage-, Schweiß-, Reparatur- oder Recyclingverfahren handelt, umfassend das Anwenden einer mechanischen Belastung auf einen Gegenstand gemäß einem der Ansprüche 12 oder 15 bei einer Temperatur (T) oberhalb der Umgebungstemperatur und vorzugsweise oberhalb der Glasübergangstemperatur Tg des wärmegehärteten Harzes.

17. Verwendung einer Zusammensetzung gemäß einem der Ansprüche 1 bis 11 oder eines Kits gemäß einem der Ansprüche 13 und 14 zur Herstellung eines in der Wärme verformbaren wärmegehärteten Harzes, das nach seiner Verformung frei von jeglichen Restspannungen ist.

18. Verwendung eines oder mehrerer Gegenstände gemäß Anspruch 12 oder eines oder mehrerer nach dem Verfahren gemäß Anspruch 15 erhaltener Gegenstände im Automobil-, Luftfahrt-, Marine-, Raumfahrt-, Sport-, Bau-, Elektronik-, Windkraft-, Verpackungs- oder Drucksektor.

19. Verwendung eines oder mehrerer Gegenstände gemäß Anspruch 12 oder eines oder mehrerer nach dem Verfahren gemäß Anspruch 15 erhaltener Gegenstände in Form von Formulierungen, Pulvern, Granulaten, Beschichtungen, Werkstoffen oder Teilen, bei denen es sich gegebenenfalls um Verbunde handelt; insbesondere zur Herstellung von Klebstoffen, zur Verkapselung von Verbindern, zur Herstellung von elektrischen Isolatoren oder auch von Prototypen.

## Claims

1. Composition comprising at least:
- a catalyst (C1) comprising at least one atom of an element (M1) chosen from: Al, Sc, Ti, Mg, Mn, Fe, Co, Ni, Cu, Zn, Zr, Sn, Hf, Pb, Bi, Sb and In,
- a catalyst (C2) comprising at least one atom of an element (M2) chosen from alkali metals and alkaline earth metals,
- the catalyst (C1) is a compound of the element (M1) and the catalyst (C2) is a compound of the element (M2), these compounds being chosen from: phosphates, carbonates, oxides, hydroxides or sulfides; carboxylates comprising at least one - COO⁻ functional group carried by a saturated or unsaturated and linear or branched hydrocarbon chain exhibiting from 1 to 40 carbon atoms, optionally interrupted by one or more heteroatoms chosen from N, O, S and P or by one or more saturated, partially unsaturated or completely unsaturated hydrocarbon rings; alkoxides comprising at least one -O⁻ functional group carried by a saturated or unsaturated and linear or branched hydrocarbon chain exhibiting from 1 to 20 carbon atoms, optionally interrupted by one or more heteroatoms chosen from N, O, S and P or by one or more saturated, partially unsaturated or completely unsaturated hydrocarbon rings; acetylacetonates; diketiminates; and their mixtures,
- a thermosetting resin and/or a thermosetting resin curing agent.

2. Composition according to Claim 1, **characterized in that** the total content of catalysts (C1) and (C2) represents from 1 to 70% by weight, preferably from 1% to 50% by weight, relative to the total weight of the composition.

3. Composition according to Claim 1 or 2, in which the element (M1) is chosen from Ti, Mn, Fe, Co, Zn, Zr, Sn and Bi, preferably from Ti, Zn, Zr, Sn and Bi, more preferentially Zn.

4. Composition according to any one of the preceding claims, in which the element (M2) is chosen from alkali metals, preferentially from Li, Na and K.

5. Composition according to any one of the preceding claims, in which the thermosetting resin comprises at least one and advantageously several epoxide functional groups and optionally at least one and advantageously several free hydroxyl and/or ester functional groups.

6. Composition according to any one of the preceding claims, in which the thermosetting resin curing agent is chosen from carboxylic acids comprising at least two -C(O)OH functional groups, carboxylic acid anhydrides comprising at least one -C(O)-O-C(O)- functional group, and their mixtures.

7. Composition according to the preceding claim, in which the ratio of the number of moles of atoms of elements (M1) and (M2) per mole of -C(O)OH functional groups or per 0.5 mol of -C(O)-O-C(O)- functional groups ranges from 1% to 50%, advantageously from 2% to 25%, preferably from 5% to 20%.

8. Composition according to any one of the preceding claims, in which the content of thermosetting resin and/or of curing agent ranges from 10% to 90% by weight, in particular from 20% to 80% by weight, indeed even from 30% to 70% by weight, relative to the total weight of the composition, the remainder to 100% being contributed by the catalysts (C1) and (C2) and optionally additional compounds.

9. Composition according to any one of the preceding claims, additionally comprising at least one additional compound chosen from: polymers, pigments, dyes, fillers, plasticizers, woven or nonwoven long or short fibres, flame retardants, antioxidants, lubricants, wood, glass, metals and their mixtures.

10. Composition according to any one of the preceding claims, additionally comprising: at least one additional catalyst, for example chosen from transesterification catalysts, specific catalysts of the opening of epoxides and their mixtures; and/or at least one additional curing agent, for example chosen from curing agents for epoxy resins, in particular curing agents of amine type, and their mixtures.

11. Composition according to any one of the preceding claims, in which the resin and/or the curing agent is present in the "activated" form, the atoms of the elements (M1) and/or (M2) being complexed by the resin and/or the curing agent.

12. Object comprising a thermoset resin obtained from a composition as defined in any one of the preceding claims.

13. Kit for the preparation of a composition in accordance with any one of Claims 1 to 11, comprising at least:
- a first composition comprising at least the catalyst (C1),
- a second composition comprising at least the catalyst (C2),
- a third composition comprising at least the curing agent and/or a fourth composition comprising at least the thermosetting resin.

14. Kit for the preparation of a composition intended for the manufacture of an object in accordance with Claim 11, comprising at least:
- a first composition comprising at least the catalyst (C1),
- a second composition comprising at least the catalyst (C2),
- a third composition comprising at least the curing agent and
- a fourth composition comprising at least the thermosetting resin,
the third and fourth compositions preferably being stored in different compartments.

15. Process for the manufacture of an object comprising:
a) making available a composition in accordance with any one of Claims 1 to 11 comprising at least the thermosetting resin, the curing agent and the catalysts (C1) and (C2); or bringing into contact the compositions of the kit according to Claim 14 in order to form such a composition,
b) shaping the composition resulting from stage a),
c) applying energy making possible the curing of the resin,
d) cooling the thermoset resin.

16. Process for deforming an object, for example being an assembling, welding, repair or recycling process, comprising the application, to an object in accordance with either one of Claims 12 and 15, of a mechanical stress at a temperature (T) greater than ambient temperature and preferentially greater than the glass transition temperature Tg of the thermoset resin.

17. Use of a composition in accordance with any one of Claims 1 to 11 or of a kit according to either of Claims 13 and 14 in order to render a thermoset resin deformable under hot conditions and devoid of any residual stress after the deforming thereof.

18. Use of one or more objects in accordance with Claim 12 or obtained according to the process in accordance with Claim 15 in the motor vehicle, aeronautical, water sports, aerospace, sports, construction, electronics, wind power, packaging or printing fields.

19. Use of one or more objects in accordance with Claim 12 or obtained according to the process in accordance with Claim 15 in the form of formulations, of powders, of granules, of coatings, of materials or of parts which are optionally composite; in particular for manufacturing adhesives, encapsulating connectors, manufacturing electrical insulators, or also prototypes.
